(19) Europäisches Patentamt / European Patent Office / Office européen des brevets

(11) **EP 4 217 727 B1**

(12) **FASCICULE DE BREVET EUROPEEN**

(45) Date de publication et mention
de la délivrance du brevet:
**01.04.2026 Bulletin 2026/14**

(21) Numéro de dépôt: **21773641.2**

(22) Date de dépôt: **23.09.2021**

(51) Classification Internationale des Brevets (IPC):
*G01N 29/04* *(2006.01)*    *G01N 29/06* *(2006.01)*
*G01N 29/30* *(2006.01)*    *G01N 29/44* *(2006.01)*

(52) Classification Coopérative des Brevets (CPC):
**G01N 29/4472; G01N 29/043; G01N 29/0672;
G01N 29/30; G01N 29/4436;** G01N 2291/0258;
G01N 2291/105; G01N 2291/2634;
G01N 2291/2636

(86) Numéro de dépôt international:
**PCT/EP2021/076145**

(87) Numéro de publication internationale:
**WO 2022/063871 (31.03.2022 Gazette 2022/13)**

(54) **MÉTHODE DE CALIBRATION POUR TOMOGRAPHIE PAR ONDES ÉLASTIQUES GUIDÉES ADAPTÉE À DES STRUCTURES DE TYPE CYLINDRE**

KALIBRIERUNGSVERFAHREN FÜR AN ZYLINDERARTIGE STRUKTUREN ANGEPASSTE GEFÜHRTE ELASTISCHE WELLENTOMOGRAFIE

CALIBRATION METHOD FOR GUIDED ELASTIC WAVE TOMOGRAPHY ADAPTED TO CYLINDER-TYPE STRUCTURES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.09.2020 FR 2009659**

(43) Date de publication de la demande:
**02.08.2023 Bulletin 2023/31**

(73) Titulaire: **Commissariat à l'Energie Atomique et aux Energies
Alternatives
75015 Paris (FR)**

(72) Inventeurs:
• DRUET, Tom
 91191 GIF-SUR-YVETTE (FR)
• HOANG HUU, Tinh
 91300 MASSY (FR)

(74) Mandataire: **Atout PI Laplace
Immeuble Up On
25 Boulevard Romain Rolland
CS 40072
75685 Paris Cedex 14 (FR)**

(56) Documents cités:
• **DRUET TOM ET AL: "Autocalibration method for guided wave tomography with undersampled data", WAVE MOTION, vol. 89, 1 June 2019 (2019-06-01), NL, pages 265 - 283, XP055806348, ISSN: 0165-2125, DOI: 10.1016/ j.wavemoti.2019.04.002**
• **WILLEY C L ET AL: "Guided wave tomography of pipes with high-order helical modes", NDT&E INTERNATIONAL, vol. 65, 4 April 2014 (2014-04-04), pages 8 - 21, XP028648573, ISSN: 0963-8695, DOI: 10.1016/J.NDTEINT.2014.03.010**

• **BRATH ALEX ET AL: "Acoustic formulation of elastic guided wave propagation and scattering in curved tubular structures", IEEE TRANSACTIONS ON ULTRASONICS, FERROELECTRICS AND FREQUENCY CONTROL, IEEE, US, vol. 61, no. 5, 1 May 2014 (2014-05-01), pages 815 - 829, XP011546672, ISSN: 0885-3010, [retrieved on 20140425], DOI: 10.1109/TUFFC.2014.6805695**

**Description**

L'invention concerne le domaine du contrôle non destructif de structures mécaniques ou contrôle de santé intégré et plus précisément les méthodes d'imagerie par tomographie de telles structures ayant pour objectif de détecter la présence de défauts.

L'invention porte sur une méthode de tomographie par diffraction comprenant un mécanisme de calibration particulièrement adapté à l'imagerie de structures de type cylindre, en particulier les cylindres de petite taille.

L'invention s'applique par exemple, mais pas exclusivement, à l'inspection de tuyaux ou de conduites forcées notamment dans les domaines des conduites de gaz, du nucléaire ou de l'hydraulique.

Le document *« Autocalibration method for guided wave tomography with undersampled data (Druet, Tastet, Chapuis, Moulin, 2019)* » décrit une méthode de tomographie par ondes guidées qui est basée sur un modèle de propagation approximé qui présente des résultats satisfaisants pour l'imagerie de structures planaires de type plaques.

La méthode proposée inclue une autocalibration des données (avant tomographie) sans nécessité de recourir à un état de référence de la structure saine qui n'est pas forcément disponible.

Un avantage de cette méthode est qu'elle permet de réaliser des mesures robustes dans le temps contrairement à une méthode de calibration basée sur un état de référence pour laquelle les mesures réalisées peuvent devenir obsolètes si les conditions environnementales (par exemple la température ou la réponse d'un capteur) évoluent au cours du temps.

Le modèle de propagation décrit dans le document précité est donc utilisé pour calibrer les mesures réalisées par les capteurs afin de respecter au mieux le modèle d'imagerie utilisé et pour compenser les réponses des capteurs qui en pratique sont différentes les unes des autres (en raison par exemple d'un couplage des capteurs sur la structure différent selon le capteur).

La méthode d'autocalibration précitée est une méthode dite monomode. La propagation du mode utilisé est considérée isotrope. Cela est le cas pour les structures de type plaques. En revanche, dans le cas de structures cylindriques, en particulier celles de faibles diamètres, cette approximation n'est plus valable et conduit à produire des images de moins bonnes qualités voire complètement erronées.

En effet, dans le cas d'un cylindre, plus les deux capteurs d'un couple de capteurs émetteur/récepteur seront positionnés sur le cylindre à des distances circonférentielles éloignées, plus l'erreur entre les courbes de dispersion réelles et les courbes de dispersion du modèle de propagation approximé, pour ce couple de capteurs est importante.

Par ailleurs, plus la longueur d'onde est grande (ou bien la fréquence du signal est faible) par rapport au diamètre du cylindre, plus l'erreur est importante.

L'invention propose une évolution de la méthode de tomographie sans état de référence par ondes guidées décrite dans le document *« Autocalibration method for guided wave tomography with undersampled data (Druet, Tastet, Chapuis, Moulin, 2019)* » pour permettre l'imagerie de structures de type cylindre, en particulier de faibles diamètres.

L'invention a pour objet une méthode de tomographie d'une structure supportant des modes de propagation guidée d'ondes élastiques, la méthode comprenant les étapes de :

- Acquérir plusieurs signaux se propageant dans la structure au moyen d'une pluralité de couples de capteurs d'ondes élastiques non-colocalisés ;

- Pour chaque couple de capteurs,

    i. Sélectionner un mode de propagation guidée,

    ii. Convertir le signal mesuré en champ d'onde pour le mode sélectionné,

    iii. Déterminer un coefficient de calibration anisotrope à partir d'un modèle de propagation du champ d'onde évalué en fonction du nombre d'onde anisotrope et de la distance entre les capteurs de la paire, et dudit champ d'onde ou d'un champ d'onde de référence correspondant à un état sain de la structure, le nombre d'onde anisotrope étant une fonction de la direction de propagation des ondes qui dépend de l'orientation des capteurs du couple,

- Calibrer les champs d'onde à l'aide des coefficients de calibration déterminés,

- Réaliser une tomographie par diffraction de la structure à partir des champs d'onde calibrés.

Selon un aspect particulier de l'invention, le coefficient de calibration anisotrope est égal au ratio entre le modèle de propagation du champ d'onde et le champ d'onde de référence et l'étape de calibration est réalisée en multipliant chaque champ d'onde par le coefficient de calibration anisotrope associé.

Selon un aspect particulier de l'invention:

- le coefficient de calibration anisotrope est égal au ratio entre le modèle de propagation du champ d'onde et le champ d'onde mesuré,
- la méthode comprend en outre une étape d'identification des couples de capteurs pour lesquels le signal mesuré correspond à un trajet qui n'intercepte pas un défaut dans la structure, ces couples étant désignés couples sains,
- l'étape de calibration est réalisée en multipliant chaque champ d'onde par la moyenne des coefficients de calibration anisotrope calculés pour les couples sains.

Selon un aspect particulier de l'invention,:

- le coefficient de calibration anisotrope est égal au ratio entre le modèle de propagation du champ d'onde et le champ d'onde mesuré,
- la méthode comprend en outre une étape d'identification des couples de capteurs pour lesquels le signal mesuré correspond à un trajet qui n'intercepte pas un défaut, ces couples étant désignés couples sains,
- l'étape de calibration est réalisée en multipliant chaque champ d'onde correspondant à un couple sain par le coefficient de calibration anisotrope associé et en multipliant les autres champs d'onde par la moyenne des coefficients de calibration anisotrope calculés pour les couples sains.

Selon un aspect particulier de l'invention, l'étape de tomographie par diffraction est compatible avec une structure anisotrope.

Selon un aspect particulier de l'invention, l'étape de calibration comprend en outre :

- le calcul d'un coefficient correctif égal au ratio entre le modèle de propagation du champ d'onde évalué en fonction du nombre d'onde isotrope du mode fondamental et le modèle de propagation du champ d'onde évalué en fonction du nombre d'onde anisotrope,
- la multiplication de chaque champ d'onde calibré par le coefficient correctif associé.

Selon un aspect particulier de l'invention, l'étape de tomographie par diffraction est compatible avec une structure isotrope.

Selon un aspect particulier de l'invention, l'étape d'identification des couples sains est réalisée au moyen d'une imagerie de tomographie en temps de vol.

Selon une variante de réalisation, la méthode selon l'invention comprend en outre la détermination d'une ellipse de confiance à partir de l'ensemble des coefficients de calibration calculés pour les couples sains, les couples correspondants à des coefficients de calibration situés à l'extérieur de l'ellipse de confiance étant exclus des couples sains.

Selon un aspect particulier de l'invention, le modèle de propagation du champ d'onde est donné par une solution de l'équation de Helmholtz pour une source d'émission impulsionnelle qui dépend du produit entre le nombre d'onde et la distance entre les capteurs d'un couple.

Selon un aspect particulier de l'invention, le nombre d'onde anisotrope est déterminé par résolution numérique à partir de la direction de propagation de l'onde associée au couple de capteurs.

Selon un aspect particulier de l'invention, la structure est un cylindre.

L'invention a aussi pour objet un dispositif de tomographie comprenant un réseau de capteurs d'ondes élastiques destinés à être positionnés sur une surface d'une structure à imager et une unité de traitement apte à recevoir les signaux acquis par les capteurs et configurée pour exécuter les étapes de la méthode de tomographie selon l'invention.

Selon un aspect particulier de l'invention, les capteurs d'ondes élastiques sont choisis parmi des transducteurs piézoélectriques, des transducteurs acoustiques électromagnétiques ou des capteurs à réseau de Bragg sur fibre optique.

Selon un aspect particulier de l'invention, les capteurs d'ondes élastiques sont aptes à fonctionner selon une méthode d'acquisition dite active ou passive.

D'autres caractéristiques et avantages de la présente invention apparaîtront mieux à la lecture de la description qui suit en relation aux dessins annexés suivants.

[Fig. 1a] la figure 1a représente un exemple de courbes de dispersion d'ondes guidées dans une structure de type plaque représentant la vitesse de groupe en fonction de la fréquence,

[Fig. 1b] la figure 1b représente un exemple de courbes de dispersion d'ondes guidées dans une structure de type plaque représentant la vitesse de phase en fonction de la fréquence,

[Fig. 2a] la figure 2a représente un exemple de courbes de dispersion d'ondes guidées dans une structure de type cylindre représentant la vitesse de groupe en fonction de la fréquence,

[Fig. 2b] la figure 2b représente un exemple de courbes de dispersion d'ondes guidées dans une structure de type cylindre représentant la vitesse de phase en fonction de la fréquence,

[Fig. 3] la figure 3 représente le mode fondamental choisi pour trois familles de modes d'ondes guidées dans une structure de type cylindre,

[Fig. 4] la figure 4 représente une vue en perspective d'un cylindre et une vue déroulée de la surface du cylindre pour analogie avec une plaque,

[Fig. 5] la figure 5 représente un schéma du front d'onde des trois premiers modes d'une famille de modes choisie,

[Fig. 6] la figure 6 représente un schéma illustrant une approximation de la famille de mode choisie par le nombre d'onde fondamental $k_0$,

[Fig. 7a] la figure 7a représente un diagramme de l'erreur commise entre un modèle simplifié et les courbes de dispersion réelles pour différentes fréquences,

[Fig. 7b] la figure 7b représente un diagramme de l'erreur commise entre un modèle simplifié et les courbes de dispersion réelles pour différents rapports diamètre/épaisseur du cylindre,

[Fig. 8] la figure 8 représente un exemple de coefficients de calibration obtenus pour réaliser de la tomographie avec état de référence, selon une méthode de l'art antérieur,

[Fig. 9] la figure 9 représente un exemple de coefficients de calibration obtenus pour réaliser de la tomographie sans état de référence selon une méthode de l'art antérieur,

[Fig. 10] la figure 10 illustre une méthode pour identifier certains trajets sains à l'aide d'une méthode de tomographie en temps de vol sans état de référence,

[Fig. 11] la figure 11 illustre l'identification des facteurs sains sur le graphe de la figure 9 à l'aide de la méthode de tomographie en temps de vol sans état de référence,

[Fig. 12] la figure 12 illustre une étape de calcul d'une ellipse de confiance appliquée au diagramme de la figure 11 permettant de calculer l'ensemble des facteurs d'autocalibration pour réaliser de la tomographie sans état de référence,

[Fig. 13] la figure 13 représente un organigramme d'une méthode de tomographie avec état de référence selon l'art antérieur,

[Fig. 14] la figure 14 représente un organigramme d'une méthode de tomographie sans état de référence selon l'art antérieur,

[Fig. 15a] la figure 15a représente une image de référence d'une structure cylindrique présentant un défaut,

[Fig. 15b] la figure 15b représente une image de tomographie de la structure de la figure 15a obtenue avec une méthode d'auto-calibration selon l'art antérieur,

[Fig. 15c] la figure 15c représente une image de tomographie de la structure de la figure 15a obtenue avec une méthode d'auto-calibration selon un mode de réalisation de l'invention,

[Fig. 16] la figure 16 représente un schéma d'un dispositif de tomographie pour mettre en œuvre l'invention,

[Fig. 17a] la figure 17a représente un diagramme de facteurs de calibration complexes pour une structure cylindrique en utilisant une méthode de calibration de l'état de l'art,

[Fig. 17b] la figure 17b représente le même type de diagramme qu'à la figure 17a mais en utilisant la méthode de calibration selon l'invention.

La tomographie par ondes élastiques guidées est une méthode d'imagerie monomode, ce qui signifie que l'on doit sélectionner un mode guidé pour réaliser l'imagerie à partir de ce mode.

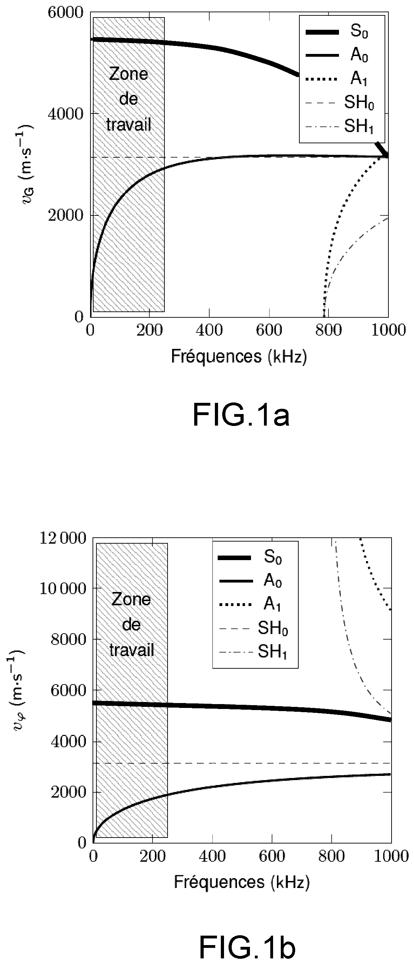

Un mode guidé est caractérisé par une courbe de dispersion. Les figures 1a et 1b représentent respectivement deux types de courbes de dispersion pour différents modes guidés dans une structure planaire de type plaque. La figure 1a représente des courbes de vitesse de groupe en fonction de la fréquence pour les modes $S_0$, $A_0$, $A_1$, $SH_0$, $SH_1$ et la figure 1b représente des courbes de vitesse de phase en fonction de la fréquence pour les mêmes modes.

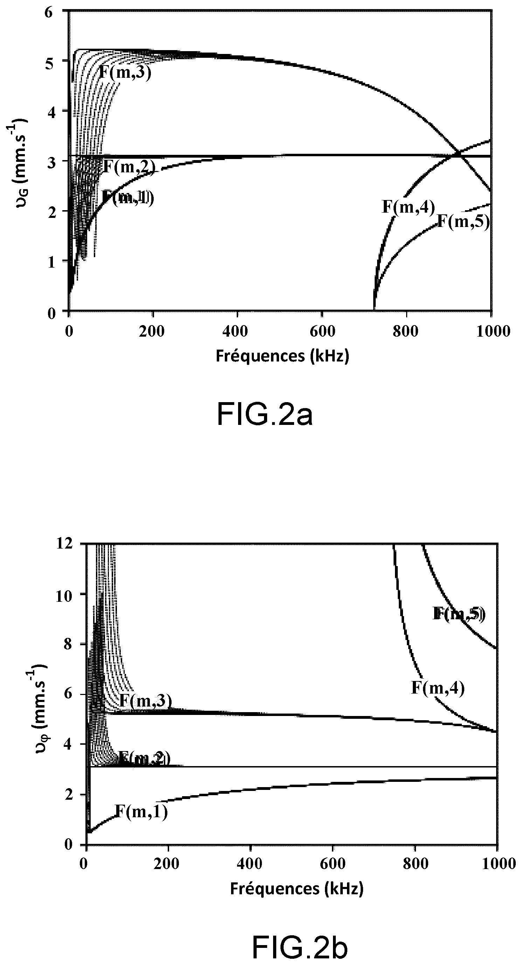

Dans le cas où la structure à imager n'est pas planaire mais tubulaire (de type cylindre), les modes guidés sont regroupés par familles de modes ayant des propriétés similaires et sont représentés par des familles de courbes de dispersion. Ce phénomène est illustré aux figures 2a et 2b qui représentent respectivement la vitesse de groupe et la vitesse de phase en fonction de la fréquence pour différentes familles de modes F(m,1), F(m,2), F(m,3), F(m,4), F(m,5).

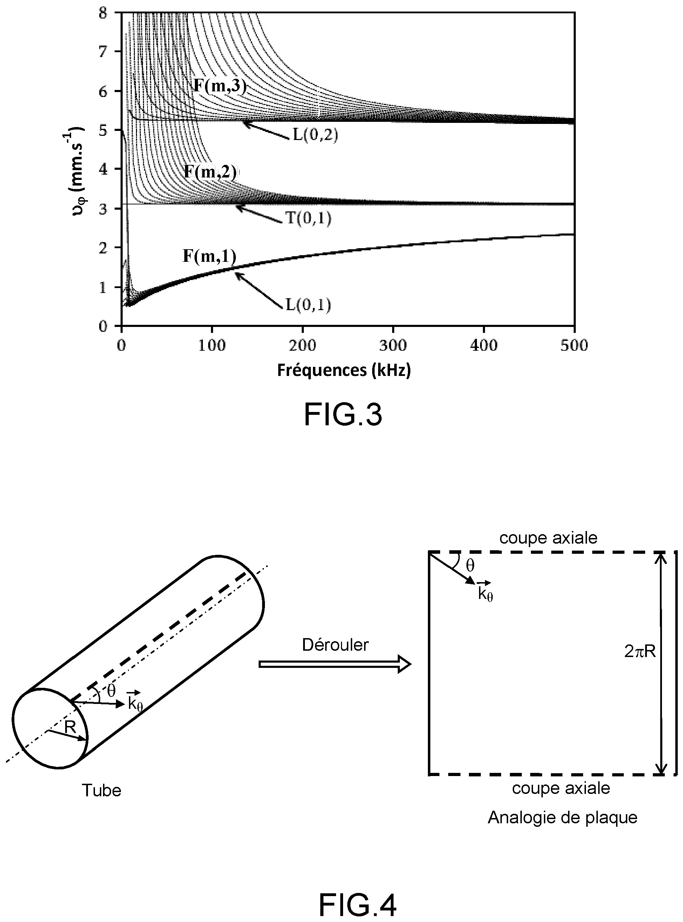

Pour pouvoir appliquer une tomographie monomode, il faut alors approximer toute une famille de modes par le mode fondamental tel que représenté à la figure 3 sur laquelle est identifié le mode fondamental choisi L(0,1), T(0,1), L(0,2) pour trois familles de modes F(m,1), F(m,2), F(m,3).

Pour appliquer la méthode de tomographie monomode décrite dans le document « Autocalibration method for guided wave tomography with undersampled data (Druet, Tastet, Chapuis, Moulin, 2019) » pour une plaque, à un cylindre, on représente le cylindre sous une forme « déroulée » pour réaliser une analogie avec la plaque.

La figure 4 représente cette analogie.

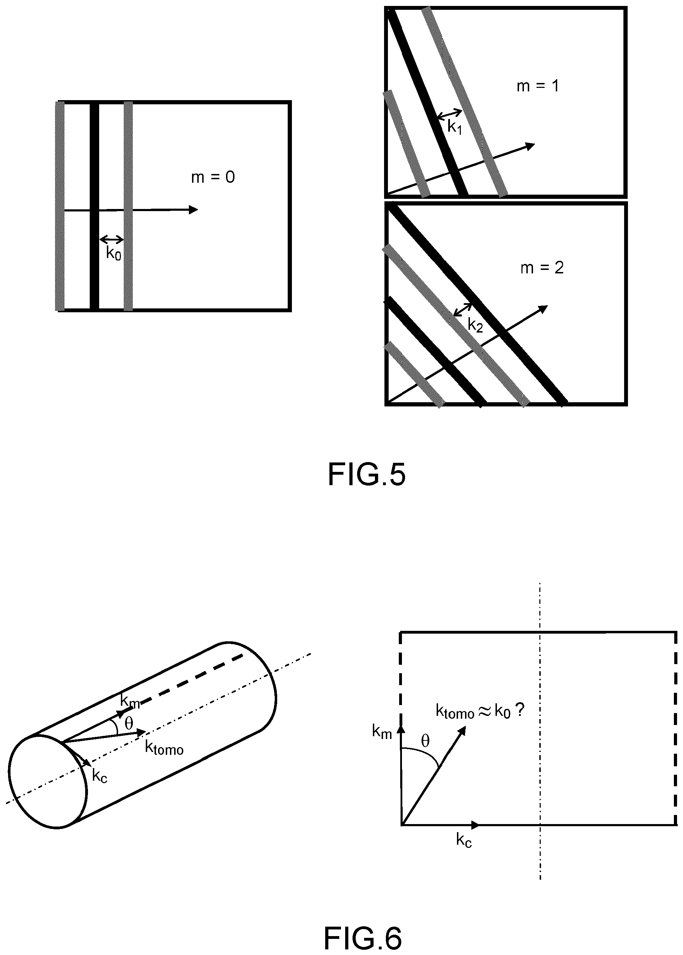

Les fronts d'ondes peuvent alors être représentés pour chaque angle de propagation $\theta$. Les trois premiers angles de propagation correspondant aux trois premiers modes de la famille choisie sont représentés sur la Figure 5.

En réalité, chacun des nombres d'ondes correspondants aux différents modes représentés à la figure 5 sont différents :

$$k_0 \neq k_1 \neq k_2 \neq k_m$$

Pour appliquer la tomographie monomode, on approxime l'ensemble de ces nombres d'onde par le nombre d'onde fondamental $k_0$.

$$k_0 \approx k_1 \approx k_2 \approx k_m$$

On cherche ensuite à identifier pour quelles configurations de cylindres, cette approximation est valide.

La figure 6 schématise l'approximation de la famille de mode sélectionnée par le nombre d'onde fondamental $k_0$.

L'équation de continuité $m\lambda_c = 2\pi R \ \forall m > 0$, où $\lambda_c$ est la longueur d'onde circonférentielle et R est le rayon du cylindre, nous permet d'exprimer le nombre d'onde $k_c = \dfrac{m}{R}$.

Le nombre d'onde $k_m$ est ensuite exprimé à l'aide de la relation suivante :

$$k_m = \pm\sqrt{k_0^2 - \left(\frac{m}{R}\right)^2}$$

A partir de cette relation, on peut ensuite comparer les courbes de dispersion obtenues à l'aide du modèle simplifié représenté par l'équation précédente à celles obtenues de manière numérique.

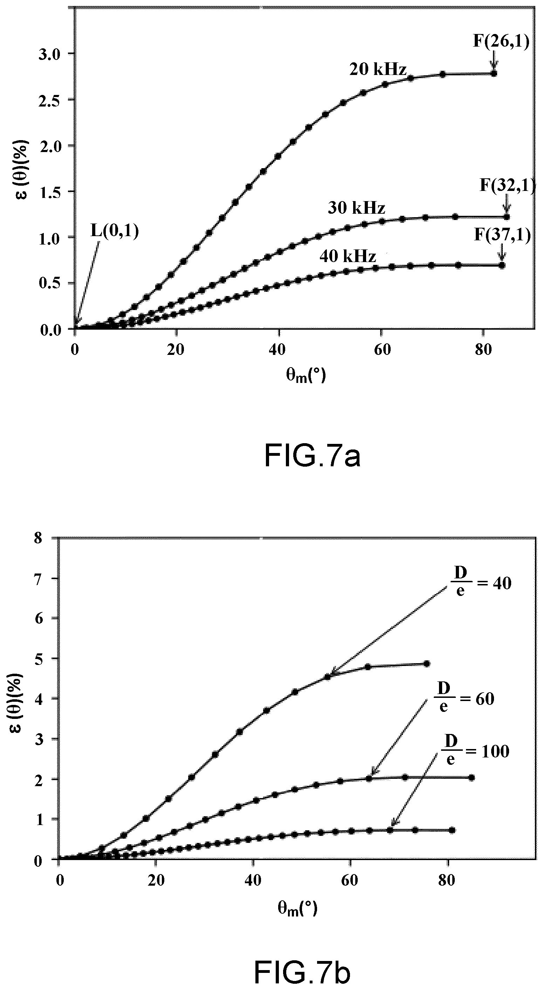

Les figures 7a et 7b montrent l'erreur commise (en %) en fonction de l'angle de propagation $\theta_m$ respectivement pour différentes fréquences et pour différents rapports entre le diamètre $\phi$ du cylindre et son épaisseur e.

On constate à l'aide de ces figures que pour la famille de modes choisie, plus l'angle $\theta_m$ est grand plus l'erreur est grande et qu'elle est nulle pour un angle nul, ce qui est logique étant donné que l'on a choisi le mode fondamental (m = 0, frond d'onde perpendiculaire à l'axe du cylindre) pour représenter toute la famille de mode.

De plus, plus la fréquence est faible (grandes longueurs d'ondes), plus l'erreur est grande (effet de la courbure du cylindre important) et plus le diamètre est faible, plus l'erreur est grande. Cela montre bien qualitativement que le modèle isotrope utilisé pour imager une plaque ne convient pas à l'imagerie de petits cylindres à basse fréquence.

Pour cette raison, il est nécessaire de développer une méthode adaptée pour ce type de structure. C'est l'objet de la présente invention.

On rappelle au préalable les principes de la calibration des mesures réalisées en tomographie par ondes guidées monomode ou tomographie par diffraction.

En tomographie par ondes élastiques guidées, une étape de calibration ou d'autocalibration des mesures est nécessaire afin de respecter au mieux le modèle d'imagerie utilisé et pour compenser les réponses des capteurs qui en pratique sont différentes les unes des autres (en raison par exemple d'un collage des capteurs sur la structure à imager différent selon le capteur).

Le modèle d'imagerie utilisé est basé sur un modèle acoustique simple. Les ondes guidées sont dispersives (c.-à-d. la vitesse de propagation de l'onde dépend de la fréquence) dans la plage de fréquence utilisée pour l'imagerie.

Le modèle acoustique s'exprime alors dans le domaine fréquentiel par l'équation de Helmholtz:

$$[\nabla^2 + k^2]U = 0$$

où $\nabla^2$ est l'opérateur Laplacien, $k = \omega / c$ est le nombre d'onde local exprimé à l'aide de la fréquence angulaire $\omega$ et de la vitesse de phase c, U représente la transformée de Fourier d'un paramètre scalaire du champ d'onde.

On fait l'hypothèse que les ondes suivent ce modèle.

On considère ensuite que le champ d'incident de l'onde guidée (sans défaut dans la structure) est égal à la fonction de Green en espace libre, qui correspond à la solution de l'équation de Helmholtz pour une source $\delta$ correspondant à une impulsion de Dirac.

$$[\nabla^2 + k_0^2]G_0(x, x_0) = \delta(x - x_0)$$

où $x_0$ et x sont des positions dans l'espace correspondant respectivement aux positions de la source de l'onde émise et de la mesure. Cette fonction de Green est résolue en deux dimensions et vaut :

$$G_0(x, x_0) = G_0(k_0|x - x_0|) = -\frac{i}{4}H_0^{(1)}(k_0|x - x_0|)$$

où $H_0^{(1)}$ est la fonction de Hankel de première espèce d'ordre zéro. Le document « Green's functions for the wave, Helmholtz and Poisson equations in a two-dimensional boundless domain, 2013 » décrit en détail, dans la section 3, la démonstration permettant d'aboutir à ce résultat.

L'expression $G_0(k_0|x - x_0|)$ constitue ainsi un modèle de propagation de l'onde guidée qui est utilisé pour calibrer les mesures réalisées.

Dans le cas où un état de référence de la structure à imager est disponible, alors les mesures de champ d'onde réalisées par un couple de capteurs émetteur/récepteur peuvent être calibrées par le facteur de calibration C suivant :

$$C = \frac{G_0(k_0|x - x_0|)}{\varphi_{ref}^*(x)}$$

$G_0$ est la fonction de Green libre acoustique, $k_0$ est le nombre d'onde du mode fondamental utilisé pour approximer la famille de modes de travail, x est la position du récepteur considéré, $x_0$ est la position de l'émetteur considéré et $\varphi_{ref}(x)$ est le champ de référence mesuré par le récepteur à un instant $t_0$ où l'on considère la structure saine.

$\varphi_{ref}^*(x)$ désigne le complexe conjugué de $\varphi_{ref}(x)$

Ces facteurs de calibration sont alors multipliés un à un aux champs d'ondes mesurés, par tous les couples de capteurs, à un instant t où la structure est potentiellement endommagée afin de réaliser l'image de tomographie.

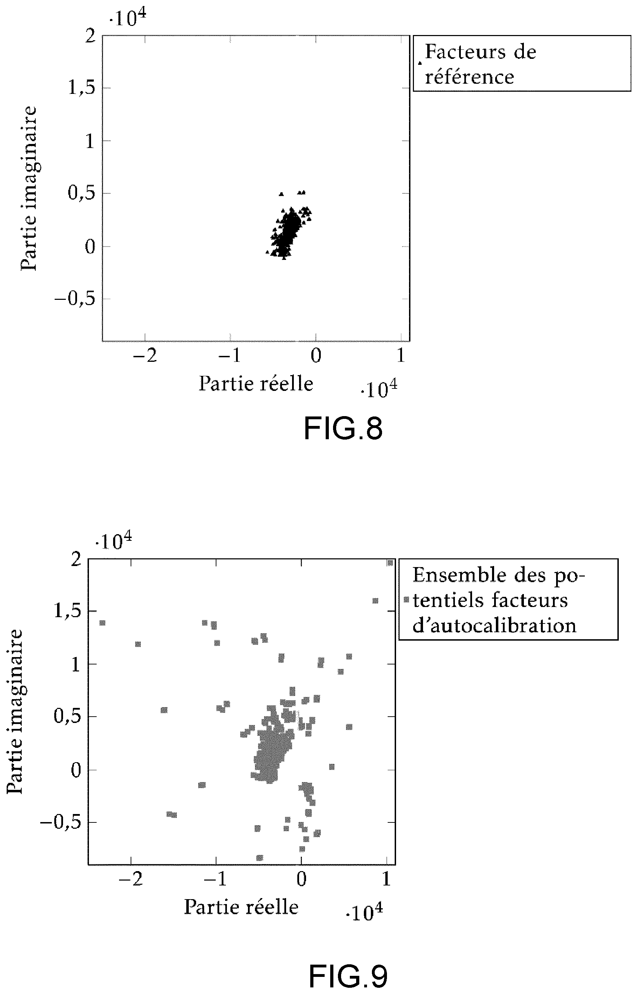

A titre d'illustration, un nuage de facteurs de calibration est représenté sur la figure 8 dans le plan complexe pour une structure de type plaque. On peut voir sur cette figure que les facteurs de calibration sont localisés dans le plan complexe, de façon regroupée. Cette répartition relativement concentrée correspond à une zone d'inspection sans défaut.

La méthode décrite dans le document *Autocalibration method for guided wave tomography with undersampled*

*data (Druet, Tastet, Chapuis, Moulin, 2019)* propose d'adapter la méthode de calibration précédente lorsqu'aucun état de référence de la structure n'est disponible.

Dans ce cas, les mesures sont calibrées par elles-mêmes à l'aide d'une méthode d'autocalibration.

Autrement dit, les facteurs de calibration sont obtenus à l'aide de la relation $C = \frac{G_0(k_0|x-x_0|)}{\varphi^*(x)}$ où $\varphi^*(x)$ est le complexe conjugué du champ d'onde mesuré à l'instant t sur une structure qui, potentiellement, présente des défauts.

La figure 9 présente un exemple de facteurs de calibration obtenus pour une plaque ayant au moins un défaut.

Une quantité importante des facteurs de calibration divergent du centre du nuage de points car ils correspondent à des trajets de l'onde qui rencontrent le défaut.

Les facteurs correspondant à un défaut doivent être éliminés du processus de calibration car ils risquent de fausser les mesures. En effet, la calibration des mesures a pour objectif de prendre en compte des évolutions des conditions d'acquisition liées aux capteurs mais ne doit pas inclure de contribution liée à un défaut.

Pour identifier les couples de capteurs qui ont produit un facteur de calibration correspondant à un défaut, une méthode proposée dans le document Autocalibration method for guided wave tomography with undersampled data (Druet, Tastet, Chapuis, Moulin, 2019) consiste à réaliser une tomographie en temps de vol sans état de référence de façon à identifier les trajets qui interceptent un défaut.

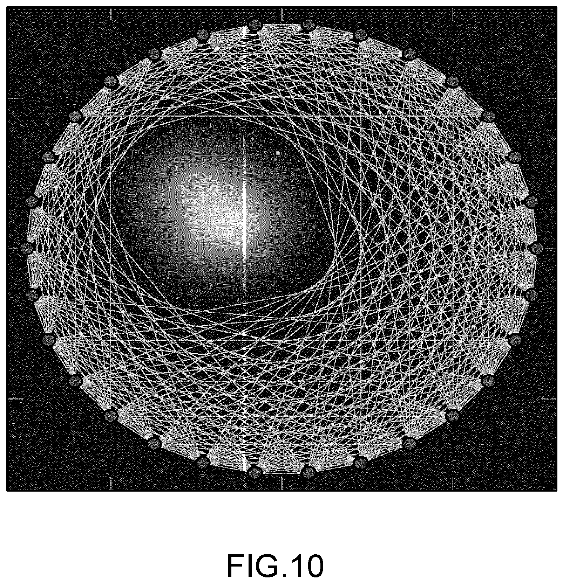

Cette méthode est illustrée à la figure 10 pour un réseau de capteurs disposés sur un cercle. Seuls les trajets directs entre deux capteurs qui n'interceptent pas le défaut sont représentés.

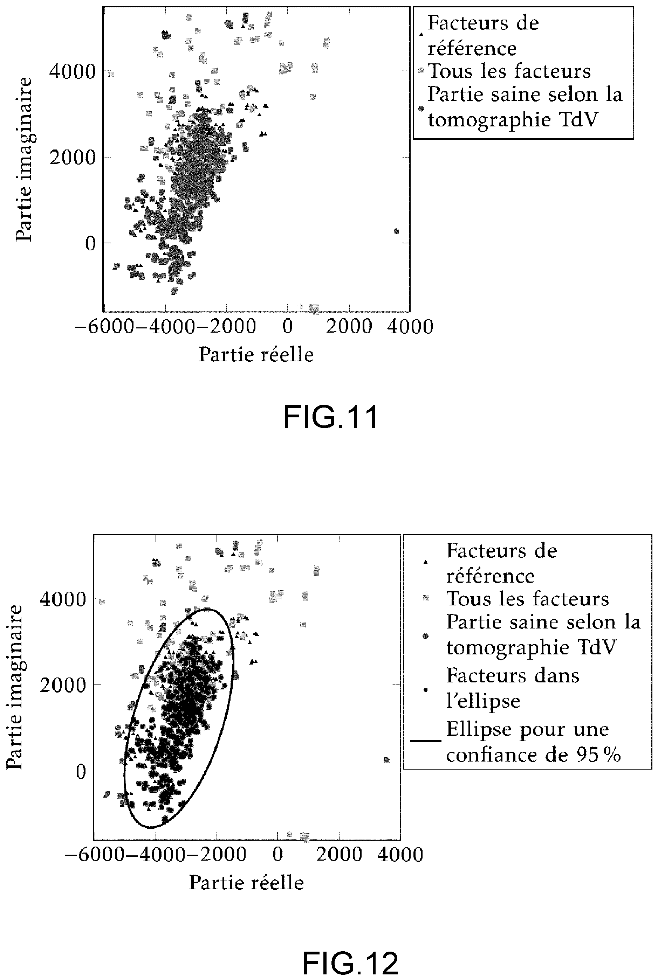

La figure 11 identifie, sur le même graphe que la figure 9, les facteurs de calibration associés aux couples de capteurs dits « sains », c'est-à-dire ceux pour lesquels l'onde n'intercepte pas un défaut.

On observe que la majorité des facteurs divergents de la zone centrale sont retirés après cette étape.

Une étape supplémentaire optionnelle consiste à calculer une ellipse de confiance pour retirer les derniers facteurs de calibration associés à un défaut. Cette ellipse est représentée sur la figure 12 pour une confiance de 95%.

L'ellipse de confiance est, par exemple déterminée de la façon suivante.

Les coefficients de calibration sont des nombres complexes et sont représentés par:

$$C = Re(C) + i * Im(C) = R + i * I$$

où R et I correspondent à la partie réelle et la partie imaginaire des coefficients de calibration.

On prend l'hypothèse que la distribution des coefficients de calibration C dans le plan complexe, c.-à-d. I en fonction de R, est une distribution normale (Distribution Gaussienne). L'ellipse de confiance pour un niveau de confiance de a% définit la région qui contient a% de tous les échantillons pouvant être conservés de la distribution gaussienne des coefficients de calibration.

Pour un niveau de confiance choisi a (%), nous pouvons obtenir une ellipse de confiance (a%) avec le grand axe de longueur $2\sqrt{s\varepsilon_1}$ et le petit axe de longueur $2\sqrt{s\varepsilon_2}$, où s définit l'échelle de l'ellipse résultant d'une ellipse de confiance choisie a (%), et s est égal à une valeur spécifique en calculant la vraisemblance du Chicarré. Par exemple un intervalle de confiance de 99% correspond à s = 9,210 ; un intervalle de confiance de 95% correspond à s = 5,991 et un intervalle de confiance de 90% correspond à s = 4,605. $\varepsilon_1$ et $\varepsilon_2$ représentent les valeurs propres de la matrice de covariance K :

$$K = \begin{bmatrix} E[(R - E[R])^2] & E[(I - E[I])(R - E[R])] \\ E[(R - E[R])(I - E[I])] & E[(I - E[I])^2] \end{bmatrix}$$

où E[.] est la fonction espérance.

De plus, pour obtenir l'orientation de l'ellipse, on calcule l'angle du plus grand vecteur propre vers l'axe des réels (R):

$$\theta = arctan \frac{V1_I}{V1_R}$$

où $V1(V1_R, V1_I)$ est le vecteur propre de la matrice de covariance K qui correspond à la plus grande valeur propre.

À partir de la longueur des axes et de l'orientation de l'ellipse nous pouvons déterminer les points C à l'intérieur de l'ellipse de confiance. Ces derniers sont alors considérés comme les facteurs d'autocalibration. Les couples correspondants à ces facteurs d'autocalibration sont alors considérés comme des couples sains pour lesquels l'onde guidée ne traverse pas de potentiel défaut.

Les facteurs de calibration retenus sont alors utilisés pour calibrer les champs d'ondes associés aux couples de capteurs « sains ».

On note N l'ensemble composé de n couples de capteurs qui est égal au nombre de potentiels facteurs d'auto-calibration. Parmi ces n facteurs, m facteurs correspondent à des trajets passant par un défaut et qui donc divergent du centre du nuage de points correspondant à des facteurs sains. On note M cet ensemble.

Ces m facteurs sont, par exemple, identifiés par une tomographie en temps de vol et/ou l'utilisation d'une ellipse de confiance comme décrit précédemment. Ils sont retirés et il reste donc n-m facteurs de calibration considérés sains qui peuvent être utilisés pour calibrer les données.

Les champs d'onde mesurés par les capteurs de l'ensemble N-M sont calibrés à l'aide des facteurs de calibration retenus.

$\varphi_{cal}{}^{[N-M]} = C^{[N-M]}\varphi^{[N-M]*}$, où $\varphi^{[N-M]}$ est le champ d'onde mesuré pour un couple de capteurs sains et $C^{[N-M]}$ son coefficient de calibration associé.

Les champs d'onde correspondants aux trajets présentant un potentiel défaut, c'est-à-dire ceux mesurés par les capteurs de l'ensemble M sont calibrés par la moyenne des facteurs d'autocalibration des couples sains :

$$\varphi_{cal}{}^{[M]} = <C^{[N-M]}> \varphi^{[M]*}$$

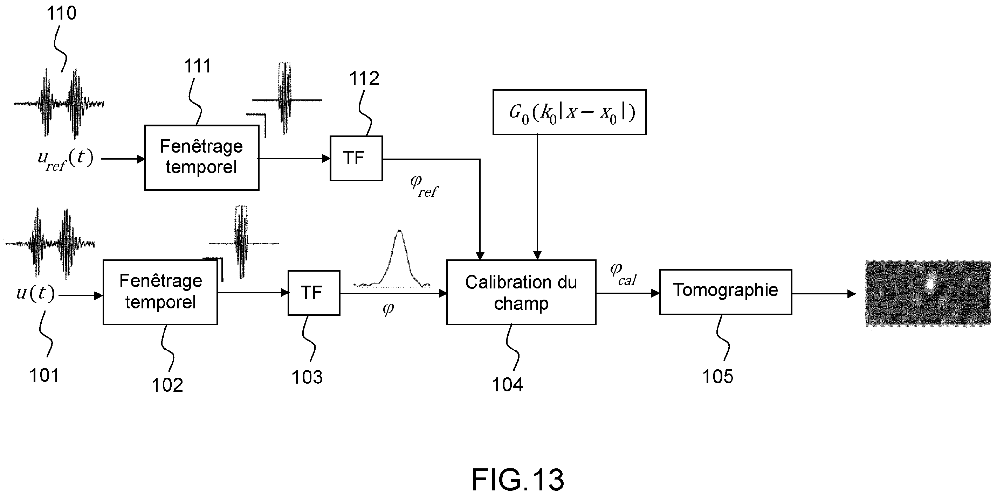

La figure 13 résume, sur un schéma, les étapes de la méthode de calibration pour une tomographie par ondes guidées avec état de référence selon l'art antérieur.

Pour chaque couple de capteurs, un signal u(t) est mesuré (étape 101), puis un fenêtrage temporel 102 est appliqué pour sélectionner un mode de propagation. On applique ensuite une transformée de Fourier 103 au signal pour obtenir le champ d'onde $\varphi$.

Les mêmes étapes 110, 111, 112 sont appliquées pour obtenir un champ d'onde de référence $\varphi_{ref}$ correspondant à un état sain de la structure.

Une étape de calibration 104 du champ d'onde mesuré est réalisée à l'aide de la relation suivante

$$\varphi_{cal}(\mathrm{x}) = \frac{G_0(k_0|x-x_0|)}{\varphi_{ref}^*(x)} \varphi^*(x)$$

Enfin, les signaux calibrés sont utilisés pour réaliser une tomographie 105 par diffraction de la structure.

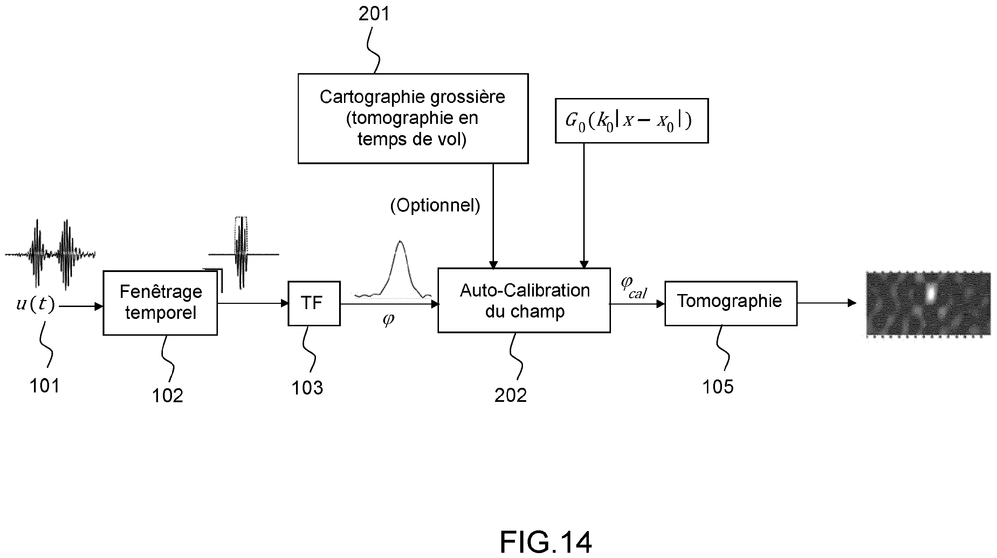

La figure 14 résume sur un schéma les étapes de la méthode d'autocalibration pour une tomographie par ondes guidées sans état de référence selon l'art antérieur. Les étapes communes à celles de la figure 13 sont identifiées par les mêmes références.

L'auto-calibration des champs d'onde 202 est réalisée de la façon décrite précédemment en identifiant les couples « sains » par exemple par une méthode de tomographie en temps de vol 201 ou toute autre méthode d'imagerie permettant d'obtenir une cartographie grossière de la zone à inspecter.

Comme indiqué précédemment les méthodes décrites aux figures 13 et 14 ne sont pas toujours applicables pour des structures de type cylindre de petit diamètre car elles sont basées sur le fait que la structure dans laquelle se propagent les ondes est isotrope, ce qui n'est plus forcément le cas pour un cylindre de petit diamètre.

L'invention propose de prendre en compte la propriété anisotrope d'une telle structure pour adapter les méthodes de calibration selon l'art antérieur.

Plus précisément, l'invention est applicable à des structures impliquant une propagation anisotrope des ondes élastiques guidées. Cela couvre le cas de structures faites d'un matériau anisotrope (plaques composites par exemple) mais aussi des structures faites d'un matériau isotrope tels que les pipes mais impliquant du fait de leurs géométries une propagation anisotrope.

Pour cela, il faut prendre en considération dans le calcul des facteurs de calibration la dépendance à l'angle de propagation $\theta$. Cela revient à calculer un facteur de calibration à l'aide de la relation :

$$C_\theta = \frac{G_0(k_\theta|x-x_0|)}{\varphi_{ref}^*(x)} \quad (1)$$

Où $k_\theta$ est le nombre d'onde anisotrope associé à chaque angle de propagation θ.

Le calcul du nombre d'onde anisotrope peut être obtenu par une résolution numérique, par exemple en interpolant les courbes de dispersion en nombre d'onde discrètes obtenues à partir de solutions exactes fournies par un logiciel de simulation. Ce nombre d'onde anisotrope peut aussi être obtenu directement par une méthode de résolution numérique exacte des modes guidés du type « code SAFE » l'acronyme SAFE signifiant *« Semi-Analytical Finite Elements method »*. Autrement dit, un exemple de méthode de résolution numérique possible est une méthode semi analytique par éléments finis.

Les méthodes de l'art antérieur peuvent être adaptées en tenant compte de l'angle de propagation (par rapport à l'axe du cylindre) selon différentes variantes de réalisation de l'invention.

Un premier mode de réalisation de l'invention consiste à appliquer une calibration avec état de référence telle que décrite à la figure 13 en remplaçant les facteurs de calibration isotropes par des facteurs de calibration anisotropes donnés par la relation (1) en calculant le nombre d'onde $k_\theta$ en fonction de la direction de propagation de l'onde qui dépend de l'orientation des capteurs du couple.

Un deuxième mode de réalisation de l'invention consiste à réaliser une autocalibration sans état de référence telle que décrite à la figure 14 en remplaçant toujours les facteurs de calibration isotropes par des facteurs de calibration anisotropes donnés par la relation :

$$C_\theta = \frac{G_0(k_\theta|x-x_0|)}{\varphi^{[N-M]^*}(x)} \quad (2)$$

N est l'ensemble composé de n couples de capteurs qui est égal au nombre de potentiels facteurs d'auto-calibration. Parmi ces n facteurs, m facteurs correspondent à des trajets passant par un défaut et qui donc divergent du centre du nuage de points correspondant à des facteurs sains. On note M cet ensemble. N-M est donc l'ensemble correspondant uniquement aux facteurs de calibration sains.

Ces m facteurs sont, par exemple, identifiés par une tomographie en temps de vol et/ou l'utilisation d'une ellipse de confiance comme décrit précédemment. Ils sont retirés et il reste donc n-m facteurs de calibration considérés sains qui peuvent être utilisés pour calibrer les données.

$\varphi^{[N-M]^*}(x)$ correspond au complexe conjugué du champ d'onde pour chaque couple de capteurs correspondant à un trajet sain. Selon cette méthode les champs d'onde correspondants aux trajets présentant un potentiel défaut sont calibrés par la moyenne des facteurs d'autocalibration des couples considérés sains :

$$\varphi_{cal}^{[M]}(x) = <\frac{G_0(k_\theta|x-x_0|)}{\varphi^{[N-M]^*}(x)}> \varphi^{[M]^*}(x)$$

Les autres champs d'onde (n'étant pas considérés impactés par le défaut) sont calibrés directement par leur facteur de calibration respectif donnés par la relation (2) où l'on considère uniquement les n-m facteurs de calibration considérés sains.

$$\varphi_{cal}^{[N-M]}(x) = \frac{G_0(k_\theta|x-x_0|)}{\varphi^{[N-M]^*}(x)} \varphi^{[N-M]^*}(x)$$

Une variante de ce deuxième mode de réalisation consiste à calibrer tous les champs d'onde (pour tous les couples de capteurs) par la moyenne des facteurs de calibration calculés pour les couples sains.

$$\varphi_{cal}^{[N]}(x) = <\frac{G_0(k_\theta|x-x_0|)}{\varphi^{[N-M]^*}(x)}> \varphi^{[N]^*}(x)$$

Le premier et le deuxième mode de réalisation de l'invention ne sont applicables que si l'algorithme de tomographie par diffraction 105 est compatible d'un fonctionnement anisotrope, c'est-à-dire qu'il prend en compte la dépendance des champs d'ondes à la direction de propagation de l'onde.

Un troisième mode de réalisation de l'invention est proposé dans le cas où l'algorithme de tomographie par diffraction 105 est prévu pour un fonctionnement isotrope et dans le cas où l'on n'utilise pas d'état de référence. Dans ce cas, il faut en outre corriger tous les champs d'onde (après calibration) par un facteur correctif $\frac{G_0(k_0|x-x_0|)}{G_0(k_\theta|x-x_0|)}$ afin de rester

compatible avec le modèle isotrope utilisé pour la tomographie.

Dans le cas où on utilise un état de référence, ce n'est pas utile d'ajouter ce facteur correctif car le facteur de calibration se simplifie pour retomber sur la solution anisotrope de l'état de l'art :

$$\varphi_{cal}^{[N]}(x) = \frac{G_0(k_\theta|x-x_0|)}{\varphi_{ref}^{[N]^*}(x)} \frac{G_0(k_0|x-x_0|)}{G_0(k_\theta|x-x_0|)} \varphi^{[N]^*}(x)$$

$$\varphi_{cal}^{[N]}(x) = \frac{G_0(k_0|x-x_0|)}{\varphi_{ref}^{[N]^*}(x)} \varphi^{[N]^*}(x)$$

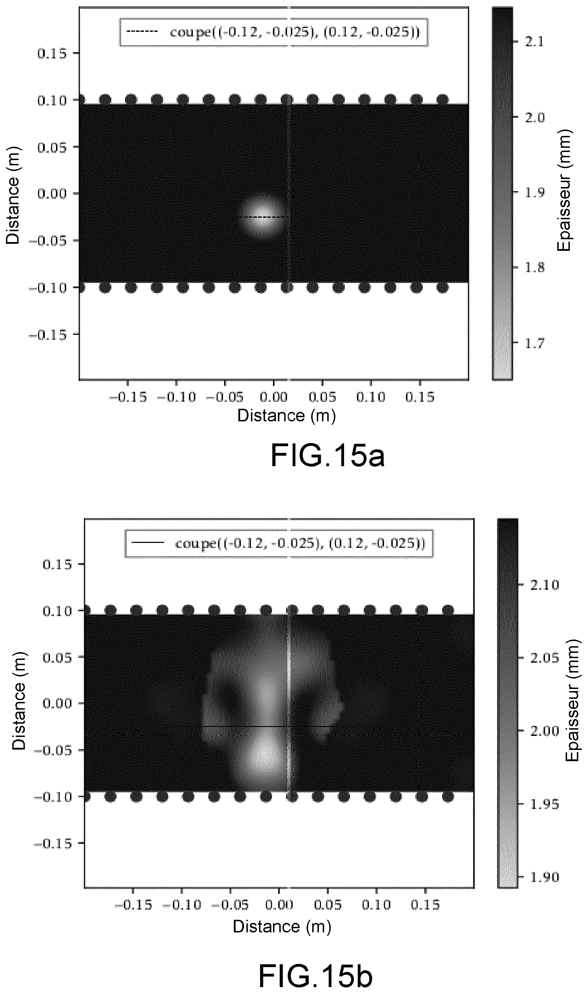

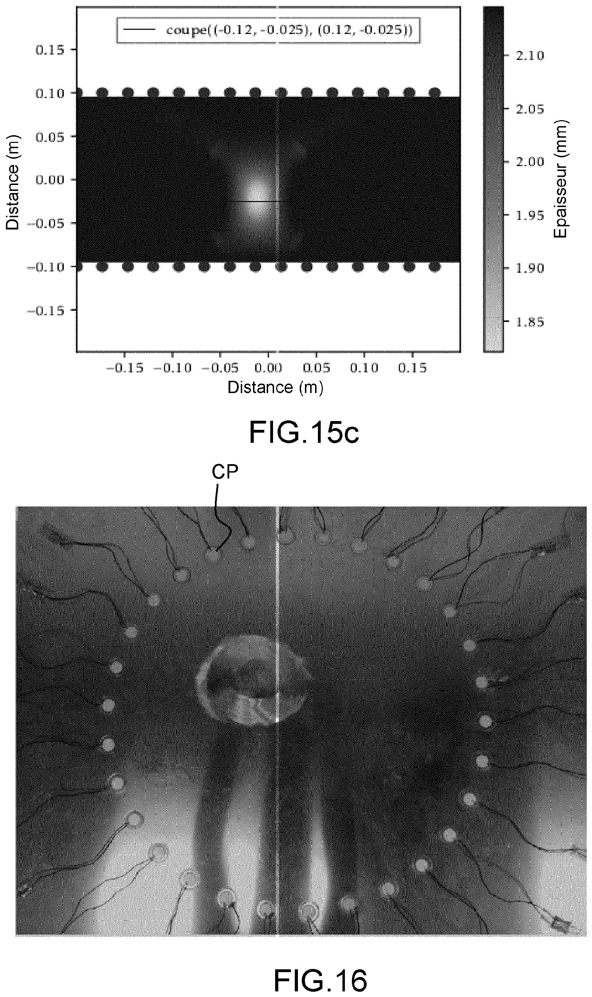

Les figures 15a,15b,15c illustrent un résultat obtenu, pour un exemple, par la méthode selon l'invention.

La figure 15a est une image de référence (représentant le défaut à imager par tomographie) d'un cylindre de diamètre médian 127,145 mm et d'épaisseur 2,145 mm en acier inoxydable. La fréquence d'inspection vaut 30 kHz. La longueur d'onde de travail pour la famille de modes F(m,1) approximée par L(0,1) est alors de 26,7 mm.

L'image est représentée sous sa forme déroulée, les cercles correspondent aux positions des capteurs.

La figure 15b représente l'image de tomographie obtenue pour une méthode d'auto-calibration isotrope selon l'art antérieur.

La figure 15c représente l'image de tomographie obtenue pour une méthode d'auto-calibration anisotrope selon le troisième mode de réalisation de l'invention.

On peut identifier sur ces deux figures que le défaut de l'image de référence est mieux reconstruit sur la figure 15c que sur la figure 15b.

La figure 16 représente schématiquement un réseau de capteurs CP agencés sur une structure à imager. Chaque capteur est apte à émettre une onde élastique guidée et à acquérir une onde émise par un autre capteur après sa propagation dans la structure.

Les capteurs sont choisis parmi des transducteurs piézoélectriques, des transducteurs acoustiques électromagnétiques (par exemple de type EMAT) ou des capteurs à réseau de Bragg sur fibre optique.

Chaque capteur est relié à une chaine d'acquisition de signal et l'ensemble des capteurs sont reliés à une unité de traitement (non représentée à la figure 16) qui est configurée pour exécuter la méthode de tomographie selon l'un des modes de réalisation de l'invention.

L'unité de traitement peut être réalisée sous forme logicielle et/ou matérielle à partir d'un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Les résultats fournis par l'unité de traitement peuvent être affichés sur un écran d'ordinateur ou directement sur une interface faisant partie du dispositif.

Pour imager une zone d'inspection d'une structure de type cylindre, les capteurs sont préférablement agencés avec un espacement d'une demi-longueur d'onde entre deux capteurs voisins autour d'une zone fermée mais peuvent être aussi agencés différemment. Par exemple, les capteurs sont positionnés le long de deux anneaux autour de la circonférence du cylindre.

L'invention est compatible avec les méthodes dites actives pour lesquelles chaque capteur émet une onde en direction de tous les autres capteurs qui reçoivent cette onde après sa propagation.

L'invention est aussi compatible avec les méthodes dites passives pour lesquelles les capteurs ne fonctionnent qu'en acquisition, le signal étant généré à partir d'un bruit ambiant.

La méthode d'imagerie par tomographie par diffraction utilisée pour réaliser l'étape 105 de l'invention est, par exemple, l'une des méthodes décrites dans le document *« Tomographie passive par ondes guidées pour des applications de contrôle santé intégré, Tom Druet, thèse soumise le 18 mai 2018 »*, par exemple une méthode de type HARBUT (Hybride Algorithm for Robust Breast Ultrasound Tomography).

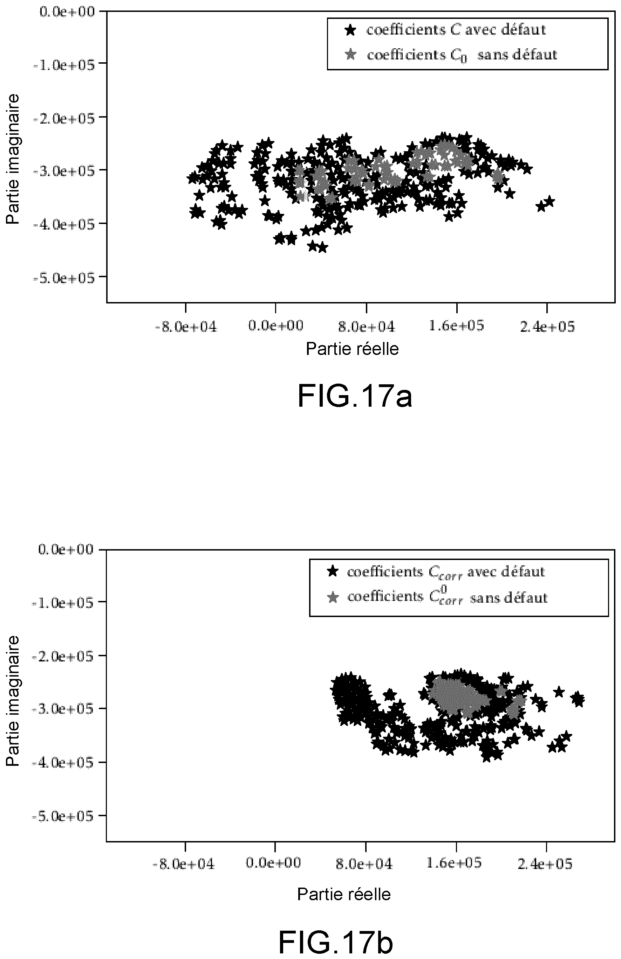

Les figures 17a et 17b représentent, dans le plan complexe, un ensemble de facteurs de calibration obtenus pour une structure cylindrique respectivement avec une méthode de l'art antérieur (figure 17a) et la méthode selon l'invention (figure 17b).

Sur la figure 17a, on a représenté l'ensemble des facteurs de calibration obtenus en appliquant la méthode de calibration de l'art antérieur décrite dans *« Autocalibration method for guided wave tomography with undersampled data (Druet, Tastet, Chapuis, Moulin, 2019)* »*, c'est-à-dire une méthode ne prenant pas en compte le nombre d'onde anisotrope pour le calcul des facteurs de calibration.

Sur la figure 17a sont représentés l'ensemble des facteurs de calibration C0 associés aux couples de capteurs dits « sains », c'est-à-dire ceux pour lesquels l'onde n'intercepte pas un défaut et l'ensemble des facteurs de calibration C associés aux couples de capteurs pour lesquels l'onde intercepte un défaut.

On peut remarquer que les facteurs de calibration se regroupent en paquets localisés dans le plan complexe. Chaque paquet correspond à un angle de propagation. Ce phénomène est due à l'erreur commise entre le choix d'un nombre d'onde isotrope $k_0$ (modèle simplifié selon l'état de l'art) et le nombre d'onde réel qui est anisotrope en réalité et qui dépend donc de l'angle de propagation $\theta$. En effet, plus l'angle $\theta$ est grand, plus l'erreur entre $k_0$ et $k(\theta) = k_\theta$ est grande.

Cette dispersion des facteurs de calibration par « paquets » associés à des angles de propagation différents conduits à une image de mauvaise qualité tel qu'illustré à la figure 15b.

La figure 17b représente les facteurs de calibration obtenus en appliquant la méthode selon l'invention.

Sur la figure 17b sont représentés l'ensemble des facteurs de calibration $CO_{corr}$ associés aux couples de capteurs dits « sains », c'est-à-dire ceux pour lesquels l'onde n'intercepte pas un défaut et l'ensemble des facteurs de calibration $C_{corr}$ associés aux couples de capteurs pour lesquels l'onde intercepte un défaut.

On peut voir cette fois que, contrairement à la figure 17a l'ensemble des facteurs de calibration sains $CO_{corr}$ se sont regroupés en un même nuage de points localisé dans le plan complexe ce qui est signe de la bonne prise en compte de l'anisotropie de propagation. On peut alors réaliser l'autocalibration sur les coefficients $C_{corr}$ sans commettre d'erreur dans la sélection des facteurs sains $C0_{corr}$.

**Revendications**

1. Méthode de tomographie d'une structure supportant des modes de propagation guidée d'ondes élastiques, la méthode comprenant les étapes de :

   - Acquérir (101) plusieurs signaux se propageant dans la structure au moyen d'une pluralité de couples de capteurs d'ondes élastiques non-colocalisés ;
   - Pour chaque couple de capteurs,

      i. Sélectionner (102) un mode de propagation guidée,
      ii. Convertir (103) le signal mesuré en champ d'onde pour le mode sélectionné,
      iii. Déterminer un coefficient de calibration anisotrope à partir d'un modèle de propagation du champ d'onde évalué en fonction du nombre d'onde anisotrope et de la distance entre les capteurs de la paire, et dudit champ d'onde ou d'un champ d'onde de référence correspondant à un état sain de la structure, le nombre d'onde anisotrope étant fonction de la direction de propagation des ondes qui dépend de l'orientation des capteurs du couple,

   - Calibrer (104,202) les champs d'onde à l'aide des coefficients de calibration déterminés,
   - Réaliser (105) une tomographie par diffraction de la structure à partir des champs d'onde calibrés.

2. Méthode de tomographie d'une structure selon la revendication 1 dans laquelle le coefficient de calibration anisotrope est égal au ratio entre le modèle de propagation du champ d'onde et le champ d'onde de référence et l'étape de calibration est réalisée en multipliant chaque champ d'onde par le coefficient de calibration anisotrope associé.

3. Méthode de tomographie d'une structure selon la revendication 1 dans laquelle :

   - le coefficient de calibration anisotrope est égal au ratio entre le modèle de propagation du champ d'onde et le champ d'onde mesuré,
   - la méthode comprend en outre une étape (201) d'identification des couples de capteurs pour lesquels le signal mesuré correspond à un trajet qui n'intercepte pas un défaut dans la structure, ces couples étant désignés couples sains,
   - l'étape de calibration est réalisée en multipliant chaque champ d'onde par la moyenne des coefficients de calibration anisotrope calculés pour les couples sains.

4. Méthode de tomographie d'une structure selon la revendication 1 dans laquelle :

   - le coefficient de calibration anisotrope est égal au ratio entre le modèle de propagation du champ d'onde et le champ d'onde mesuré,
   - la méthode comprend en outre une étape (201) d'identification des couples de capteurs pour lesquels le signal mesuré correspond à un trajet qui n'intercepte pas un défaut, ces couples étant désignés couples sains,
   - l'étape de calibration est réalisée en multipliant chaque champ d'onde correspondant à un couple sain par le coefficient de calibration anisotrope associé et en multipliant les autres champs d'onde par la moyenne des coefficients de calibration anisotrope calculés pour les couples sains.

5. Méthode de tomographie selon l'une quelconque des revendications 3 ou 4 dans laquelle l'étape de tomographie par diffraction est compatible avec une structure anisotrope.

6. Méthode de tomographie selon l'une quelconque des revendications 3 ou 4 dans laquelle l'étape de calibration comprend en outre :

   - le calcul d'un coefficient correctif égal au ratio entre le modèle de propagation du champ d'onde évalué en fonction du nombre d'onde isotrope du mode fondamental et le modèle de propagation du champ d'onde évalué en fonction du nombre d'onde anisotrope,
   - la multiplication de chaque champ d'onde calibré par le coefficient correctif associé.

7. Méthode de tomographie selon la revendication 6 dans laquelle l'étape de tomographie par diffraction est compatible avec une structure isotrope.

8. Méthode de tomographie selon l'une quelconque des revendications 3 à 7 dans laquelle l'étape d'identification des couples sains (201) est réalisée au moyen d'une imagerie de tomographie en temps de vol.

9. Méthode de tomographie selon l'une quelconque des revendications 3 à 8 comprenant en outre la détermination d'une ellipse de confiance à partir de l'ensemble des coefficients de calibration calculés pour les couples sains, les couples correspondants à des coefficients de calibration situés à l'extérieur de l'ellipse de confiance étant exclus des couples sains.

10. Méthode de tomographie selon l'une quelconque des revendications précédentes dans laquelle le modèle de propagation du champ d'onde est donné par une solution de l'équation de Helmholtz pour une source d'émission impulsionnelle qui dépend du produit entre le nombre d'onde et la distance entre les capteurs d'un couple.

11. Méthode de tomographie selon l'une quelconque des revendications précédentes dans laquelle le nombre d'onde anisotrope est déterminé par résolution numérique à partir de la direction de propagation de l'onde associée au couple de capteurs.

12. Méthode de tomographie selon l'une quelconque des revendications précédentes dans laquelle la structure est un cylindre.

13. Dispositif de tomographie comprenant un réseau de capteurs d'ondes élastiques (CP) destinés à être positionnés sur une surface d'une structure à imager et une unité de traitement apte à recevoir les signaux acquis par les capteurs et configurée pour exécuter les étapes de la méthode de tomographie selon l'une quelconque des revendications précédentes.

14. Dispositif de tomographie selon la revendication 13 dans lequel les capteurs d'ondes élastiques (CP) sont choisis parmi des transducteurs piézoélectriques, des transducteurs acoustiques électromagnétiques ou des capteurs à réseau de Bragg sur fibre optique.

15. Dispositif de tomographie selon l'une des revendications 13 ou 14 dans lequel les capteurs d'ondes élastiques (CP) sont aptes à fonctionner selon une méthode d'acquisition dite active pour laquelle chaque capteur émet une onde en direction de tous les autres capteurs qui reçoivent cette onde après sa propagation ou passive pour laquelle les capteurs ne fonctionnent qu'en acquisition.

**Patentansprüche**

1. Tomografie-Verfahren einer Struktur, die Modi zur geführten Ausbreitung elastischer Wellen unterstützt, wobei das Verfahren die Schritte umfasst zum:

   - Erfassen (101) mehrerer Signale, die sich in der Struktur ausbreiten, anhand einer Vielzahl von nicht gemeinsam installierten Sensorenpaaren für elastische Wellen;

- für jedes Sensorenpaar,

    i. Auswählen (102) eines Modus zur geführten Ausbreitung,
    ii. Umwandeln (103) des gemessenen Signals in ein Wellenfeld für den ausgewählten Modus,
    iii. Bestimmen eines anisotropen Kalibrationsmodus aus einem Ausbreitungsmodell des bewerteten Wellenfelds in Abhängigkeit von der Anzahl anisotroper Wellen und dem Abstand zwischen den Sensoren des Paares, und des Wellenfeldes oder eines Referenzwellenfeldes, entsprechend einem gesunden Zustand der Struktur, wobei die Anzahl anisotroper Wellen von der Ausbreitungsrichtung der Wellen abhängig ist, die von der Ausrichtung der Sensoren des Paares abhängt,

- Kalibrieren (104,202) der Wellenfelder mithilfe der bestimmten Kalibrationskoeffizienten,
- Durchführen (105) einer Tomografie durch Beugen der Struktur aus den kalibrierten Wellenfeldern.

**2.** Tomografie-Verfahren einer Struktur nach Anspruch 1, wobei der anisotrope Kalibrationskoeffizient gleich dem Verhältnis zwischen dem Ausbreitungsmodell des Wellenfeldes und dem Referenzwellenfeld ist, und der Kalibrationsschritt durch Multiplizieren eines jeden Wellenfeldes mit dem zugeordneten anisotropen Kalibrationskoeffizienten durchgeführt wird.

**3.** Tomografie-Verfahren nach Anspruch 1, wobei:

- der anisotrope Kalibrationskoeffizient gleich dem Verhältnis zwischen dem Ausbreitungsmodell des Wellenfeldes und dem gemessenen Wellenfeld ist,
- wobei das Verfahren weiter einen Schritt (201) zur Identifizierung der Sensorenpaare umfasst, bei denen das gemessene Signal einer Strecke entspricht, die keinen Fehler in der Struktur abfängt, wobei diese Paare als gesunde Paare bezeichnet werden,
- der Kalibrationsschritt durch Multiplizieren eines jeden Wellenfeldes mit dem Mittelwert der für die gesunde Paare berechneten anisotropen Kalibrierungskoeffizienten durchgeführt wird.

**4.** Tomografie-Verfahren nach Anspruch 1, wobei:

- der anisotrope Kalibrationskoeffizient gleich dem Verhältnis zwischen dem Ausbreitungsmodell des Wellenfeldes und dem gemessenen Wellenfeld ist,
- wobei das Verfahren weiter einen Schritt (201) zur Identifizierung der Sensorenpaare umfasst, bei denen das gemessene Signal einer Strecke entspricht, die keinen Fehler abfängt, wobei diese Paare als gesunde Paare bezeichnet werden,
- der Kalibrationsschritt durch Multiplizieren eines jeden Wellenfeldes, das einem gesunden Paar entspricht, mit dem zugeordneten anisotropen Kalibrationskoeffizienten und durch Multiplizieren der anderen Wellenfelder mit dem Mittelwert der für die gesunde Paare berechneten anisotropen Kalibrierungskoeffizienten durchgeführt wird.

**5.** Tomografie-Verfahren nach einem der Ansprüche 3 oder 4, wobei der Tomografieschritt durch Beugen mit einer anisotropen Struktur kompatibel ist.

**6.** Tomografie-Verfahren nach einem der Ansprüche 3 oder 4, wobei der Kalibrationsschritt weiter umfasst:

- die Berechnung eines Korrekturkoeffizienten gleich dem Verhältnis zwischen dem Ausbreitungsmodell des in Abhängigkeit von der Anzahl an anisotropen Wellen des Grundmodus bewerteten Wellenfeldes und dem Ausbreitungsmodell des in Abhängigkeit von der Anzahl anisotroper Wellen bewerteten Wellenfeldes,
- die Multiplikation eines jeden kalibrierten Wellenfeldes mit dem zugeordneten Korrekturkoeffizienten.

**7.** Tomografie-Verfahren nach Anspruch 6, wobei der Tomografieschritt durch Beugen mit einer isotropen Struktur kompatibel ist.

**8.** Tomografie-Verfahren nach einem der Ansprüche 3 bis 7, wobei der Identifizierungsschritt der gesunden Paare (201) anhand einer Tomografie-Bildgebung in Flugzeit durchgeführt wird.

**9.** Tomografie-Verfahren nach einem der Ansprüche 3 bis 8, weiter umfassend die Bestimmung einer Vertrauensellipse aus der Reihe der für die gesunden Paare berechneten Kalibrationskoeffizienten, wobei die Paare, die Kalibrationskoeffizienten entsprechen, die sich außerhalb der Vertrauensellipse befinden, von den gesunden Paaren ausgeschlossen werden.

10. Tomografie-Verfahren nach einem der vorstehenden Ansprüche, wobei das Ausbreitungsmodell des Wellenfeldes durch eine Lösung der Helmholtz-Gleichung für eine Impulsemissionsquelle gegeben ist, die vom Produkt zwischen der Wellenanzahl und dem Abstand zwischen den Sensoren eines Paares abhängt.

11. Tomografie-Verfahren nach einem der vorstehenden Ansprüche, wobei die Anzahl anisotroper Wellen durch digitale Auflösung aus der Ausbreitungsrichtung der dem Sensorenpaar zugeordneten Welle bestimmt wird.

12. Tomografie-Verfahren nach einem der vorstehenden Ansprüche, wobei die Struktur ein Zylinder ist.

13. Tomografie-Vorrichtung, umfassend ein Netzwerk aus Sensoren für elastische Wellen (CP), die dazu bestimmt sind, auf eine Oberfläche einer abzubildenden Struktur positioniert zu werden, und eine Verarbeitungseinheit, die imstande ist, die Signale zu empfangen, die von den Sensoren erfasst werden, und konfiguriert ist, um die Schritte des Tomografie-Verfahrens nach einem der vorstehenden Ansprüche auszuführen.

14. Tomografie-Vorrichtung nach Anspruch 13, wobei die Sensoren für elastische Wellen (CP) aus piezoelektrischen Wandlern, elektromagnetischen Akustikwandlern oder Bragg-Gitter-Sensor mit optischer Faser ausgewählt werden.

15. Tomografie-Vorrichtung nach einem der Ansprüche 13 oder 14 wobei die Sensoren für elastische Wellen (CP) imstande sind, gemäß einem sogenannten aktiven Erfassungsverfahren, bei dem jeder Sensor eine Welle in Richtung aller anderen Sensoren ausgibt, die diese Welle nach ihrer Ausbreitung empfangen, oder passiven Erfassungsverfahren, bei dem die Sensoren nur zum Erfassen funktionieren.

## Claims

1. Method for tomography of a structure which supports guided propagation modes for elastic waves, the method comprising the steps of:

    - acquiring (101) a plurality of signals which propagate in the structure using a plurality of pairs of non-co-localized elastic wave sensors;
    - for each pair of sensors,

        i. selecting (102) a guided propagation mode,
        ii. converting (103) the measured signal into a wave field for the selected mode,
        iii. determining an anisotropic calibration coefficient from a propagation model of the wave field evaluated as a function of the number of the anisotropic wave and the distance between the sensors of the pair, and the wave field or a reference wave field which corresponds to a healthy state of the structure, the anisotropic wave number being a function of the propagation direction of the waves which is dependent on the orientation of the sensors of the pair,

    - calibrating (104, 202) the wave fields using the calibration coefficients determined,
    - carrying out (105) a tomography by means of diffraction of the structure from the calibrated wave fields.

2. Method for tomography of a structure according to claim 1, wherein the anisotropic calibration coefficient is equal to the ratio between the propagation model of the wave field and the reference wave field and the calibration step is carried out by multiplying each wave field by the associated anisotropic calibration coefficient.

3. Method for tomography of a structure according to claim 1, wherein:

    - the anisotropic calibration coefficient is equal to the ratio between the propagation model of the wave field and the measured wave field,
    - the method further comprises a step (201) of identifying the sensor pairs for which the measured signal corresponds to a path which does not intercept a defect in the structure, these pairs being designated healthy pairs,
    - the calibration step is carried out by multiplying each wave field by the mean of the anisotropic calibration coefficients calculated for the healthy pairs.

4. Method for tomography of a structure according to claim 1, wherein:

   - the anisotropic calibration coefficient is equal to the ratio between the propagation model of the wave field and the measured wave field,
   - the method further comprises a step (201) of identifying the sensor pairs for which the measured signal corresponds to a path which does not intercept a defect, these pairs being designated healthy pairs,
   - the calibration step is carried out by multiplying each wave field which corresponds to a healthy pair by the associated anisotropic calibration coefficient and multiplying the other wave fields by the mean of the anisotropic calibration coefficients calculated for the healthy pairs.

5. Tomography method according to either claim 3 or claim 4, wherein the step of tomography by means of diffraction is compatible with an anisotropic structure.

6. Tomography method according to either claim 3 or claim 4, wherein the calibration step further comprises:

   - the calculation of a corrective coefficient which is equal to the ratio between the propagation model of the evaluated wave field as a function of the isotropic wave number of the fundamental mode and the propagation model of the wave field evaluated as a function of the anisotropic wave number,
   - the multiplication of each calibrated wave field by the associated corrective coefficient.

7. Tomography method according to claim 6, wherein the step of tomography by means of diffraction is compatible with an isotropic structure.

8. Tomography method according to any one of claims 3 to 7, wherein the step of identifying healthy pairs (201) is carried out using tomography imaging in flight time.

9. Tomography method according to any one of claims 3 to 8, further comprising the determination of a confidence ellipse from all the calibration coefficients calculated for the healthy pairs, the pairs corresponding to calibration coefficients located outside the confidence ellipse being excluded from the healthy pairs.

10. Tomography method according to any one of the preceding claims, wherein the propagation model of the wave field is given by a solution of the Helmholtz equation for a pulsed transmission source which is dependent on the product between the wave number and the distance between the sensors of a pair.

11. Tomography method according to any one of the preceding claims, wherein the anisotropic wave number is determined by digital resolution from the propagation direction of the wave associated with the sensor pair.

12. Tomography method according to any one of the preceding claims, wherein the structure is a cylinder.

13. Tomography device comprising a network of elastic wave sensors (CP) which are intended to be positioned on a surface of a structure which is intended to be imaged and a processing unit which is capable of receiving the signals acquired by the sensors and which is configured to execute the steps of the tomography method according to any one of the preceding claims.

14. Tomography device according to claim 13, wherein the elastic wave sensors (CP) are selected from piezoelectric transducers, electromagnetic acoustic transducers or fiber optic Bragg grating sensors.

15. Tomography device according to either claim 13 or claim 14, wherein the elastic wave sensors (CP) are capable of functioning in accordance with a so-called active acquisition method, for which each sensor transmits a wave in the direction of all the other sensors which receive this wave after its propagation, or passive acquisition method, for which the sensors only function in terms of acquisition.

FIG.1a

FIG.1b

FIG.2a

FIG.2b

FIG.3

FIG.4

FIG.5

FIG.6

FIG.7a

FIG.7b

FIG.8

FIG.9

FIG.10

FIG.11

FIG.12

FIG.13

201

Cartographie grossière
(tomographie en
temps de vol)

$G_0(k_0|x - x_0|)$

(Optionnel)

$u(t)$

Fenêtrage
temporel

TF

$\varphi$

Auto-Calibration
du champ

$\varphi_{cal}$

Tomographie

101

102

103

202

105

FIG.14

FIG.15a

FIG.15b

FIG.15c

FIG.16

FIG.17a

FIG.17b

## RÉFÉRENCES CITÉES DANS LA DESCRIPTION

**Littérature non-brevet citée dans la description**

- Autocalibration method for guided wave tomography with undersampled data. *Druet, Tastet, Chapuis, Moulin,*, 2019
- Autocalibration method for guided wave tomography with undersampled data. *Druet, Tastet, Chapuis, Moulin*, 2019
- Tomographie passive par ondes guidées pour des applications de contrôle santé intégré. *Tom Druet*, 18 May 2018